# EUROPÄISCHE PATENTSCHRIFT

(11) **EP 1 228 944 B1**
(45) Veröffentlichungstag und Bekanntmachung des Hinweises auf die Patenterteilung: **28.04.2004**
(21) Anmeldenummer: 02002146.5
(22) Anmeldetag: 29.01.2002
(51) Int. Cl.: B62D 25/06, B60R 9/058, B62D 27/02

(54) **Fahrzeugdach**
Vehicle roof
Toit de véhicule

(30) Priorität: 06.02.2001 DE 10105165
(43) Veröffentlichungstag der Anmeldung: 07.08.2002
(73) Patentinhaber: JAC Products Deutschland GmbH, 42285 Wuppertal (DE)
(72) Erfinder: Lumpe, Karl-Heinz, 45749 Sprockhövel (DE); Gross, Michael, 44809 Bochum (DE); Kolodziej, Klaus, 42329 Wuppertal (DE)
(74) Vertreter: Rehders, Jochen, Dipl.-Ing.

(56) Entgegenhaltungen:
- EP-A- 0 325 876
- PATENT ABSTRACTS OF JAPAN vol. 1998, no. 14, 31. Dezember 1998 (1998-12-31) -& JP 10 250490 A (NISSAN MOTOR CO LTD), 22. September 1998 (1998-09-22)
- PATENT ABSTRACTS OF JAPAN vol. 1998, no. 09, 31. Juli 1998 (1998-07-31) -& JP 10 086758 A (SUZUKI MOTOR CORP), 7. April 1998 (1998-04-07)
- PATENT ABSTRACTS OF JAPAN vol. 2000, no. 03, 30. März 2000 (2000-03-30) -& JP 11 348672 A (MITSUBISHI MOTORS CORP;MITSUBISHI AUTOMOB ENG CO LTD), 21. Dezember 1999 (1999-12-21)

## Beschreibung

Die Erfindung bezieht sich auf ein Fahrzeugdach für einen Personenkraftwagen, wie Limousine, Coupé, Kombi, Van oder Kleinbus mit einem Dachblech, dessen Längsränder jeweils an einem Längsträger des Dachrahmens der Fahrzeugkarosserie befestigbar sind, wobei Mittel zur zuätzlichen Abstützung und Befestigungsanordnung an den Längsträgern des Dachrahmens vorgesehen sind und das Dachblech Öffnungen für Befestigungselemente für Dachrelings, Dachlastenquerträger oder dergleichen aufweist. Ein derartiges Fahrzeugdach geht aus der JP 10250490 A hervor.

Beim Aufbau einer Fahrzeugkarosserie wird herkömmlicherweise eine Schweißverbindung zwischen dem Fahrzeugdach und dem Dachrahmen vorgesehen. Solche Schweißverbindungen werden in jüngerer Zeit zunehmend durch Klebeverbindungen ersetzt. Dabei ergeben sich gewisse Schwierigkeiten, beispielsweise dann, wenn der Klebeverbund während der Aushärtezeit des eingesetzten Klebstoffs Erschütterungen ausgesetzt wird, was sich beim Transport der Karosserie auf dem Montageband aber nicht verhindern lässt, es sei denn, dass von langen Aushärte- und damit Wartezeiten Gebrauch gemacht wird.

Der vorliegenden Erfindung liegt nun die Aufgabe zugrunde, die Befestigung eines Fahrzeugdachs an den Längsträgern eines Dachrahmens zu vereinfachen, dabei das Dachblech zu versteifen und mit minimalem Aufwand dafür Sorge zu tragen, dass das Dachblech nach einem Verkleben mit den Längsträgern des Dachrahmens auch schon dann fest mit dem Dachrahmen verbunden ist, wenn sich der eingesetzte Klebstoff noch in der Aushärtephase befindet.

Zur Lösung dieser Aufgabe ist erfindungsgemäß vorgesehen, dass das Dachblech zur zusätzlichen Abstützung und Befestigungsanordnung an den Längsträgern des Dachrahmens an jeder Längsrandseite eine Profilleiste in unlösbarer Anordnung trägt, die ihrerseits jeweils an den Längsträgern befestigbar sind, wobei die Profilleisten hohl sind und an ihren am Dachblech anliegenden Seiten jeweils wenigstens eine Öffnung aufweisen, die durch die Offnungen im Dachblech für in den Profilleisten verspannbare Befestigungselemente von Dachrelings, Dachlastenquerträgern od. dgl. zugänglich sind.

Die Erfindung besteht demnach im wesentlichen darin, dass für ein Fahrzeugdach ein Dachblech mit daran integrierten Profilleisten zur Verfügung gestellt wird, die ihrerseits an den Längsträgern zu befestigen sind, und zwar zusätzlich zur Klebeverbindung zwischen dem Dachblech und den Längsträgern des Dachrahmens. Der besondere Vorteil dieser erfindungsgemäßen Maßnahme ist, dass das Dachblech nach dem Verkleben mit den Längsträgern oder auch mit dem gesamten Dachrahmen der Fahrzeugkarosserie über die Profilleisten fest mit dem Dachrahmen verbindbar ist, so dass der Klebeverbund zwischen dem Dachblech und dem Dachrahmen während der Aushärtezeit des eingesetzten Klebstoffs auch durch Erschütterungen der Karosserie beim Transport auf dem Montageband nicht beeinträchtigt werden kann. Ein weiterer besonderer Vorteil der Erfindung besteht darin, dass eine Dachlast nicht in das Dachblech eingeleitet wird sondern über die Profilleisten in den wesentlich stabileren Dachrahmen der Fahrzeugkarosserie.

Gemäß der Erfindung ist weiterhin vorgesehen, dass die Profilleisten am Dachblech jeweils durch eine Klebeverbindung gehalten und an den Längsträgern des Dachrahmens jeweils mittels Schrauben befestigbar sind.

Die Öffnungen im Dachblech sind bei Nichtverwendung von Dachrelings, Dachlastenquerträgem od. dgl. durch Stopfen, Schieber, Klappen od. dgl. verschließbar, um Schmutz und Feuchtigkeit von der Fahrzeugkarosserie fernzuhalten.

Die Profilleisten können jeweils aus einem gerollten oder stranggepressten Profil au: Stahl oder Aluminium bestehen, wobei die Öffnungen als durchlaufende Schlitze ausgebildet sein können und auch einen Steg mit Öffnungen und im Bereich der Öffnungen Gewindeeinzüge, Schweiß- oder Einpressmuttern für darin einschraubbare Gewindebolzen aufweisen.

Einem Bestreben der Automobilbauer zukünftig verstärkt modulare Fahrzeugbauteile einzusetzen, wird durch eine Weiterbildung der Erfindung, die darin besteht, dass das Dachblech mit den daran angeordneten Profilleisten und zusammen mit einem am Dachblech festgelegten Dachhimmel eine vorgefertigte Montageeinheit bildet, Rechnung getragen. Dabei kann der Dachhimmel mit einem Dachhimmelbezug und/oder mit Innenraumverkleidungen, Sonnenblenden, Innenrückblickspiegel, Innenraumbeleuchtungseinrichtungen, Verkabelungen, Bedien- und Anzeigeelemente, Schiebe- oder Sonnendach und deren Rahmenteile und Antriebselemente, Haltegriffe u. dgl. versehen sein.

Die Erfindung wird nachfolgend anhand der Zeichnungen näher erläutert, und es zeigen:
- Fig. 1: ein erstes Ausführungsbeispiel und
- Fig.2: ein zweites Ausführungsbeispiel eines Fahrzeugdachs gemäß der Erfindung.

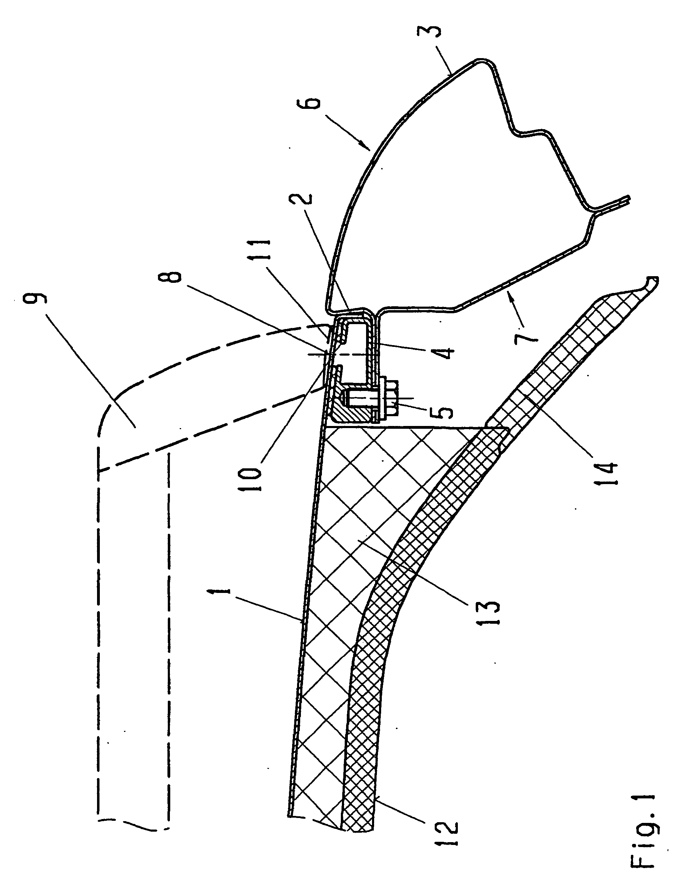

Fig. 1 zeigt im Schnitt einen seitlichen Längsrandbereich eines Fahrzeugs im Fahrzeugdachbereich und lässt das Dachblech 1 eines Fahrzeugdachs erkennen. Der andere, nicht gezeigte Längsrandbereich ist spiegelbildlich zum gezeigten ausgebildet. Das Dachblech 1 ist an den Längsrandbereichen abgewinkelt und mit den Längsrändern 2 jeweils an einen Längsträger 3 eines nicht näher dargestellten Dachrahmens abgestützt. Zwischen den Längsrändern 2 des Dachblechs 1 und den Längsträgern 3, von denen nur einer dargestellt ist, besteht bevorzugterweise eine Klebeverbindung.

Das Dachblech 1 trägt zur zusätzlichen Abstützung und Befestigungsanordnung an den Längsträgern 3 an jeder Längsrandseite eine Profilleiste 4 in unlösbarer Anordnung. Bevorzugt ist die Profilleiste 4 ans Dachblech 1 angeklebt. Die Profilleisten 4 sind an jeweils einem der Längsträger 3 befestigbar, und zwar bevorzugterweise - wie dargestellt - über Schraubverbindungen. Dafür weisen die Profilleisten 4 und die Längsträger 3 miteinander fluchtende Öffnungen zum Durchführen von Gewindebolzen 5 auf, wobei an den Profilleisten 4 oder an den Längsträgern 3 Gewindedurchzüge, Schweißmuttern oder Einpressmuttern vorgesehen sein können.

Die Längsträger 3 können jeweils aus einem außen liegenden Seitenwandrahmenteil 6 und einem Verstärkungs- bzw. einem liegenden Seitenwandrahmenteil 7 bestehen.

Das Dachblech 1 weist an den Längsrandbereichen Öffnungen 8 auf, die auch die am Dachblech 1 anliegende Seite der Profilleiste 4 durchsetzen und die zum Durchführen von nicht gezeigten Befestigungsbolzen von Dachrelings, gestrichelt angedeuteten Dachlastenträgern 9 od. dgl. dienen. Die Öffnungen in den Profilleisten 4 bestehen aus durchlaufenden Schlitzöffnungen 10. Wie die Zeichnung erkennen lässt, wird eine Dachlast über die Profilleisten 4 in die Längsträger 3 eingeleitet, so dass das Dachblech 1 im wesentlichen unbelastet bleibt. Bei Nichtgebrauch einer Dachreling oder von Dachlastenquerträgern 9 lassen sich die Öffnungen 8 in einfachster Weise z.B. mittels eines gestrichelt angedeuteten Stopfens 11 verschließen.

Das Fahrzeugdach weist zudem die Besonderheit auf, dass das Dachblech 1 mit den daran angeordneten Profilleisten 4 und zusammen mit einem am Dachblech 1 festgelegten Dachhimmel 12 eine vorgefertigte Montageeinheit bildet, die als Dachmodul an der Fahrzeugkarosserie wie gezeigt anzuordnen ist. Das Dachmodul besteht aus dem Dachblech 1, den Profilleisten 4, dem Dachhimmel 15 und einer Zwischenlage 13 zwischen Dachblech 1 und Dachhimmel 12. Das Dachmodul weist somit einen Sandwichaufbau auf, wobei die Zwischenlage 13 z.B. aus Schaumkunststoff besteht.

Zwischen dem Dachblech 1 und der Zwischenlage 13 einerseits wie auch zwischen der Zwischenlage 13 und dem Dachhimmel 12 andererseits können Klebeverbindungen vorgesehen sein, wobei sowohl physikalisch als auch chemisch abbindende Klebstoffe zum Einsatz kommen können. An den Dachhimmel 12 kann sich eine Dachrahmen- oder Säulenverkleidung 14 anschließen.

Wenn auch im einzelnen nicht dargestellt, kann das Dachmodul eines oder mehrere Anbauteile in vormontierter Anordnung aufweisen. Hierzu gehören beispielsweise ein Dachhimmelbezug, Innenraumverkleidungen, Sonnenblenden, Innenbeleuchtungseinrichtungen, Haltegriffe u. dgl. mehr.

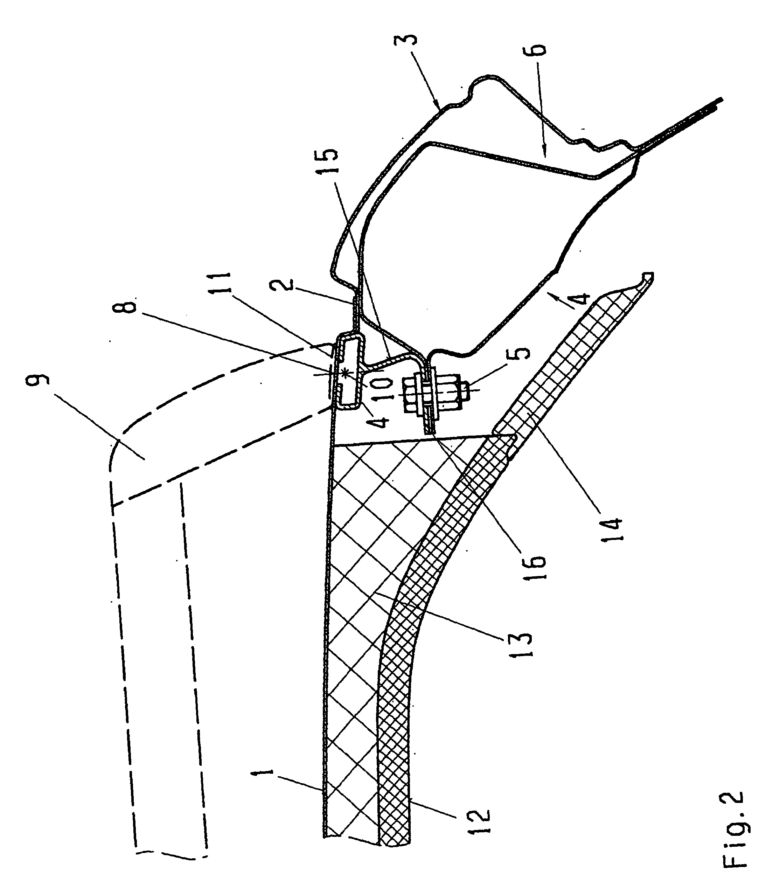

Das Ausführungsbeispiel der Erfindung nach Fig. 2 entspricht im wesentlichen dem nach Fig. 1, so dass auch übereinstimmende Bezugszeichen verwendet wurden. Die Profilleiste 4 nach Fig. 2 weist einen Steg 15 mit einem abgebogenen Endabschnitt 16 auf, der auf einem Flansch des Längsträgers 3 abgestützt und an diesem mittels Gewindebolzen 5 und Gewindemuttern festgelegt ist.

Durch die beschriebene Erfindung wird die Fixierung und Positionierung eines Dachmoduls während des Verklebens an einem Dachrahmen der Fahrzeugkarosserie gewährleistet. Ferner wird durch zusätzliche Befestigungspunkte zwischen den Bauteilen (Schraubverbindungen) ein höherer Kraftfluss erreicht. Die Erfindung dient mit Vorteil außerdem dazu, eine Verbindung eines Querträgers oder einer Dachreling mit der Karosserie durch eine Befestigungsaufnahme herzustellen.

## Patentansprüche

1. Fahrzeugdach für einen Personenkraftwagen od. dgl. mit einem Dachblech (1), dessen Längsränder (2) jeweils an einem Längsträger (3) des Dachrahmens der Fahrzeugkarosserie befestigbar sind, wobei Mittel zur zusätzlichen Abstützung und Befestigungsanordnung an den Längsträgern (3) des Dachrahmens vorgesehen sind und das Dachblech (1) Öffnungen (8) für Befestigungselemente von Dachrelings, Dachlastenquerträgern oder dergleichen aufweist, **dadurch gekennzeichnet, daß** das Dachblech (1) an jeder Längsrandseite eine Profilleiste (4) in unlösbarer Anordnung trägt, die ihrerseits jeweils an den Längsträgern (3) befestigbar sind, wobei die Profilleisten (4) hohl sind und an ihren am Dachblech (1) anliegenden Seiten jeweils wenigstens eine Öffnung (10) aufweisen, die durch die im Dachblech (1) vorgesehenen Öffnungen (8) für die in den Profilleisten (4) verspannbaren Befestigungselemente von Dachrelings, Dachlastenquerträgern oder dergleichen. zugänglich sind.

2. Fahrzeugdach nach Anspruch 1, **dadurch gekennzeichnet, dass** die Profilleisten (4) am Dachblech (1) jeweils durch eine Klebeverbindung gehalten und an den Längsträgern (3) des Dachrahmens jeweils mittels Schrauben befestigbar sind.

3. Fahrzeugdach nach Anspruch 1 oder 2, **dadurch gekennzeichnet, dass** die Öffnungen (8) im Dachblech (1) durch Stopfen (11), Schieber, Klappen od. dgl. verschließbar sind.

4. Fahrzeugdach nach wenigstens einem der vorangegangenen Ansprüche, **dadurch gekennzeichnet, dass** die Profilleisten (4) jeweils aus einem gerollten oder stranggepressten Profil aus Stahl oder Aluminium bestehen und die Öffnungen (10) als durchlaufende Schlitze ausgebildet sind.

5. Fahrzeugdach nach einem der vorangegangenen Ansprüche, **dadurch gekennzeichnet, dass** die Profilleisten (4) einen Steg (15) mit Öffnungen und im Bereich der Öffnungen Gewindeeinzüge, Schweiß- oder Einpressmuttern für darin einschraubbare Gewindebolzen aufweisen.

6. Fahrzeugdach nach wenigstens einem der vorangegangenen Ansprüche , **dadurch gekennzeichnet, dass** das Dachblech (1) mit den daran angeordneten Profilleisten (4) und zusammen mit einem am Dachblech (1) festgelegten Dachhimmel (15) eine vorgefertigte Montageeinheit bildet.

7. Fahrzeugdach nach Anspruch 6, **dadurch gekennzeichnet, dass** der Dachhimmel (15) mit einem Dachhimmelbezug und/oder mit Innenraumverkleidungen, Sonnenblenden, Innenrückblickspiegel, Innenbeleuchtungseinrichtungen, Verkabelungen, Bedien- und Anzeigeelemente, Schiebe- oder Sonnendach tznd deren Rahmenteile und Antriebselemente, Haltegriffe u. dgl. versehen ist.

## Claims

1. A vehicle roof for a passenger car or the like, comprising a roof panel (1), the longitudinal edges (2) of which can be fastened in each case to a longitudinal member (3) of the roof frame of the vehicle body, means being provided for the additional supporting and fastening arrangement to the longitudinal members (3) of the roof frame and the roof panel (1) having openings (8) for fastening elements of roof rails, roof load crossbars or the like, **characterised in that** the roof panel (1) bears on each long edge side a profiled strip (4) in a non-detachable arrangement, which in turn can be fastened in each case to the longitudinal members (3), the profiled strips (4) being hollow and each having on their sides which lie against the roof panel (1) at least one opening (10), which are accessible through the openings (8) provided in the roof panel (1) for the fastening elements for roof rails, roof load crossbars or the like which can be braced in the profiled strips (4).

2. A vehicle roof according to Claim 1, **characterised in that** the profiled strips (4) are each held against the roof panel (1) by an adhesive join and can be fastened to the longitudinal members (3) of the roof frame in each case by means of screws.

3. A vehicle roof according to Claim 1 or 2, **characterised in that** the openings (8) in the roof panel (1) can be closed by plugs (11), sliders, flaps or the like.

4. A vehicle roof according to at least one of the preceding claims, **characterised in that** the profiled strips (4) each consist of a rolled or extruded profile of steel or aluminium and the openings (10) are in the form of continuous slots.

5. A vehicle roof according to one of the preceding claims, **characterised in that** the profiled strips (4) have a web piece (15) with openings and in the region of the openings threaded receivers, weld nuts or insert nuts for threaded bolts which can be screwed into them.

6. A vehicle roof according to at least one of the preceding claims, **characterised in that** the roof panel (1) with the profiled strips (4) arranged thereon and together with a headlining (15) fixed to the roof panel (1) form a prefabricated assembly unit.

7. A vehicle roof according to Claim 6, **characterised in that** the headlining (15) is provided with a headlining fabric and/or with interior linings, sun visors, interior rear-view mirror, interior light fittings, cabling, operating and display elements, sliding or sun-roofs and their frame parts and drive elements, grab handles and the like.

## Revendications

1. Toit de véhicule pour une voiture de tourisme ou similaire comportant une tôle de toit (1) dont les bords longitudinaux (2) peuvent être fixés chacun à un longeron (3) du cadre du toit de la carrosserie du véhicule, des moyens pour l'appui supplémentaire et l'agencement de fixation aux longerons (3) du cadre du toit étant prévu, et la tôle (1) du toit présentant des ouvertures (8) pour des éléments de fixation de galeries de toit, des traverses de porte-bagages de toit ou similaires, **caractérisé en ce que** la tôle (1) du toit porte sur chaque côté de bordure longitudinal une baguette profilée (4), dans une disposition permanente, lesquelles baguettes profilées peuvent être fixées, chacune de leur côté, aux longerons (3), les baguettes profilées (4) étant creuses et présentant, sur chacun de leurs côtés s'appliquant contre la tôle (1) du toit, au moins une ouverture (10) qui est accessible par les ouvertures (8), prévues dans la tôle (1) du toit, pour les éléments de fixation pouvant être serrés dans les baguettes profilées (4), de galeries de toit, de traverses pour porte-bagages de toit ou similaires.

2. Toit de véhicule selon la revendication 1, **caractérisé en ce que** les baguettes profilées (4) sont maintenues chacune sur la tôle (1) du toit au moyen d'une liaison par collage et peuvent être fixées chacune aux longerons (3) du cadre de toit au moyen de vis.

3. Toit de véhicule selon la revendication 1 ou 2, **caractérisé en ce que** les ouvertures (8) pratiquées dans la tôle (1) du toit peuvent être fermées par des bouchons (11), des coulisseaux, des clapets ou similaires.

4. Toit de véhicule selon l'une au moins des revendications précédentes, **caractérisé en ce que** les baguettes profilées (4) sont réalisées chacune dans un profilé roulé ou extrudé, en acier ou aluminium, et les ouvertures (10) sont réalisées en tant que fentes traversantes.

5. Toit de véhicule selon l'une des revendications précédentes, **caractérisé en ce que** les baguettes profilées (4) présentent une nervure (15) avec des ouvertures et, dans la zone des ouvertures, des renfoncements taraudés, des écrous soudés ou sertis pour des boulons à visser à l'intérieur.

6. Toit de véhicule selon l'une au moins des revendications précédentes, **caractérisé en ce que** la tôle (1) du toit forme, avec les baguettes profilées (4) disposées sur celles-ci et avec un plafond (15) fixé à la tôle (1) du toit, une unité de montage préfabriquée.

7. Toit de véhicule selon la revendication 6, **caractérisé en ce que** le plafond (15) est pourvu d'un revêtement et/ou d'habillages d'habitacle, de pare-soleil, de rétroviseurs intérieurs, de dispositifs d'éclairage intérieur, de câblages, d'éléments de commande et d'affichage, d'un toit coulissant ou d'un toit pare-soleil ainsi que de leurs parties de cadre et éléments d'entraînement, poignées et similaires.
